# EUROPÄISCHE PATENTSCHRIFT

(11) **EP 1 491 813 B1**
(45) Veröffentlichungstag und Bekanntmachung des Hinweises auf die Patenterteilung: **25.10.2006**
(21) Anmeldenummer: 04014763.9
(22) Anmeldetag: 24.06.2004
(51) Int. Cl.: F16L 55/115, F16L 19/00, E03C 1/22

(54) **Befestigungsanordnung zur Verbindung von Bauelementen aus dem Installationsbereich**
Fixing arrangement for connecting components in the field of installation
Dispositif de fixation pour raccorder des composants de construction à installer

(30) Priorität: 26.06.2003 DE 10328648
(43) Veröffentlichungstag der Anmeldung: 29.12.2004
(73) Patentinhaber: VIEGA GmbH & Co. KG., 57439 Attendorn (DE); Blanco GmbH & Co. KG, 75038 Oberderdingen (DE)
(72) Erfinder: Viegener, Walter, 57439 Attendorn (DE); Bittger, Dirk, Dipl.-Ing., 76133 Karlsruhe (DE); Klump, Eberhard, 75015 Bretten-Diedelsheim (DE); Dittes, Ralf, 75015 Bretten (DE)
(74) Vertreter: Cohausz & Florack

(56) Entgegenhaltungen:
- EP-A- 0 379 830
- EP-A- 0 834 621
- DE-C- 10 207 358
- US-A- 3 973 690
- US-A- 4 863 328
- US-A- 5 403 043
- US-A- 5 897 277

## Beschreibung

Die vorliegende Erfindung betrifft eine Befestigungsanordnung zur Verbindung von Bauelementen aus dem Installationsbereich gemäß dem Oberbegriff des Anspruchs 1.

Solche Befestigungsanordnungen werden insbesondere an Durchführungen im Installationsbereich eingesetzt, beispielsweise bei Ablaufgamituren, Drehbetätigungen oder anderen Bauelementen. Meist müssen das rohrförmige Bauteil und das Verbindungsteil aneinander fixiert gehalten werden, um eine mechanische Festlegung zu erreichen, wie an einer Platte, einem Boden oder einer Wand. Bei solchen Verbindungsarten ist es bekannt, das rohrförmige Bauteil mit dem Verbindungsteil zu verschrauben und somit eine dauerhafte Verbindung zu erhalten. Bei einer solchen Schraubverbindung ist es jedoch möglich, dass infolge von Alterungserscheinungen und/oder Vibrationen sich das Verbindungsteil und das rohrförmige Bauteil voneinander lösen oder zumindest die Fixierung durch die Verbindung nicht mehr gewährleistet wird. Ein solches versehentliches Lösen der Befestigungsanordnung kann zu erheblichen Schäden führten.

Aus der gattungsbildenden US 4,863,328 ist ein Sperrmechanismus für über eine Gewindeverbindung miteinander verbindbare Bauelemente aus dem Installationsbereich bekannt. Eines der Bauelemente ist rohrförmig ausgebildet und mit einem Innengewinde versehen, während ein damit verbindbares Verbindungsteil an seinem Umfang ein Außengewinde und eine elastische Zunge aufweist. Das freie Ende der Zunge ist dabei an einem eine Schrägfläche aufweisenden Vorsprung des rohrförmigen Bauelements verrastbar.

Des weiteren ist aus der DE 102 07 358 C1 eine Vorrichtung zum verriegeln einer Überwurfmutter für eine Kupplung bekannt. Die Vorrichtung umfasst einen Körper, der auf einer Seite mit einem Verbindungsrohr aus Kunststoff und auf der anderen Seite mit einem verbindungsrohr aus Metall verbunden ist, und eine Überwurfmutter, die mit dem Körper verschraubt wird, wenn das metallische Verbindungsrohr in den Körper eingesetzt ist, um einen Ring mit Druck zu beaufschlagen und dadurch zu verhindern, dass sich das metallische verbindungsrohr vom Körper löst. Die Vorrichtung weist zudem eine Hakenplatte auf, die von dem Körper nach außen verläuft und mit dem metallischen Verbindungsrohr verbunden ist. An der Hakenplatte sind mehrere abgerundete Hakenvorsprünge ausgebildet, die von der Hakenplatte in regelmäßigen abständen vorstehen. Den Hakenvorsprünge sind Hakennuten zugeordnet, wobei eine Hakennut mit einem Hakenvorsprung in Eingriff kommt, um zu verhindern, dass sich die Überwurfmutter löst, wenn die Überwurfmutter angeschraubt wird.

Der vorliegenden Erfindung liegt die Aufgabe zugrunde, eine weitere Befestigungsanordnung zur Verbindung von Bauelementen aus dem Installationsbereich zu schaffen, bei der ein unbeabsichtigtes Lösen des rohrförmigen Bauteils von dem Verbindungsteil verhindert wird.

Diese Aufgabe wird durch eine Befestigungsanordnung mit den Merkmalen des Anspruchs 1 gelöst.

Erfindungsgemäß sind an einer Stirnkante des rohrförmigen Bauteils Rastmittel brückenartig zwischen einem inneren Schenkel und einem äußeren Schenkel ausgebildet, wobei zwischen diesen Rastmitteln ein Abstand besteht, der mindestens so groß ist wie die in Drehrichtung des Verbindungsteils betrachtete Abmessung eines jeweiligen Rastmittels am Verbindungsteil. In der montierten Position des Verbindungsteils sind dessen Rastmittel zwischen den voneinander beabstandeten Rastmitteln des rohrförmigen Bauteils angeordnet.

Ein Lösen des Verbindungsteils von dem rohrförmigen Bauteil wird über die mechanischen Rastmittel dauerhaft vermieden, auch wenn infolge von Vibrationen oder Ermüdungserscheinungen die Gewindeverbindung nachlassen würde. Ferner kann nach erfolgter Montage das Verbindungsteil nicht versehentlich gelöst werden, da dies durch die Sicherung der Rastmittel verhindert wird. Durch die Rastmittel müssen auch keine zusätzlichen Sicherungsmittel, wie Kleber oder andere mechanische Befestigungsmittel eingesetzt werden.

Gemäß einer bevorzugten Ausführungsform der Erfindung sind die Rastmittel an dem Verbindungsteil federnd ausgebildet. Dadurch wird beim Eindrehen des Verbindungsteils das Einrasten der federnden Rastmittel akustisch und manuell wahrgenommen. Wenn die Rastmittel beim Verschrauben des rohrförmigen Bauteils mit dem Verbindungsteil verrasten und eine Drehbewegung zum Lösen der Gewindeverbindung verhindern, kann die Befestigungsanordnung zur einmaligen Montage ausgebildet sein.

Für eine kompakte Bauweise sind die Rastmittel erfindungsgemäß an der Stirnkante des rohrförmigen Bauteils angeordnet. Dann kann die Außen- oder Innenseite des rohrförmigen Bauteils für die Gewindeverbindung genutzt werden. Das Verbindungsteil muss lediglich den Bereich der Stirnkante überdecken. Vorzugsweise ist das Gewinde an dem Verbindungsteil an einem Abschnitt angeordnet, der das rohrförmige Bauteil umgreift, und die Rastmittel sind an einem nach innen gerichteten Flansch vorgesehen. Dadurch kann das rohrförmige Bauteil zur Durchführung eines Fluides eingesetzt werden, ohne dass Profilierungen im Innenbereich vorgesehen sind.

Vorzugsweise weisen die Rastmittel mehrere voneinander beabstandete Vorsprünge auf, beispielsweise können mindestens acht Vorsprünge ringförmig angeordnet sein. Dann können die Vorsprünge in einer ausreichenden Höhe ausgebildet werden, die auf die Gewindesteigung abgestimmt ist. Die Art der Rastung lässt sich durch die Anzahl und die Geometrie der Vorsprünge sowie des Gewindes festlegen. Die Vorsprünge weisen dabei möglichst eine Einführschräge auf, damit beim Verschrauben ein federndes Einrasten möglich ist.

Die Erfindung wird nachfolgend anhand von mehreren Ausführungsbeispielen mit Bezug auf die beigefügten Zeichnungen näher erläutert. Es zeigen:
- Fig. 1: eine geschnittene Ansicht eines Ausführungsbeispiels einer erfindungsgemäßen Befestigungsanordnung im montierten Zustand;
- Fig. 2: eine perspektivische Ansicht der Befestigungsanordnung der Fig. 1 vor der Montage;
- Fig. 3: eine vergrößerte Detailansicht der Rasteinrichtung der Befestigungsanordnung der Fig. 1;
- Fig. 4: eine perspektivische Ansicht einer Befestigungsanordnung gemäß einem zweiten Ausführungsbeispiel vor der Montage;
- Fig. 5: eine Detailansicht der Rasteinrichtung der Befestigungsanordnung der Fig. 4;
- Fig. 6: eine perspektivische Ansicht einer Befestigungsanordnung gemäß einem dritten Ausführungsbeispiel vor der Montage, und
- Fig. 7: eine Detailansicht der Rasteinrichtung der Befestigungsanordnung der Fig. 6.

Eine Befestigungsanordnung umfasst ein rohrförmiges Bauteil 10 aus Kunststoff oder einem anderen geeigneten Material, an dem ein verdickter Endabschnitt 11 ausgebildet ist. Der Endabschnitt 11 umfasst einen inneren Schenkel 12 und einen äußeren Schenkel 13, zwischen denen brückenartig mehrere Vorsprünge 15 ausgebildet sind. An der Außenseite des Schenkels 13 ist ein Gewinde 14 angeformt.

Die Befestigungsanordnung umfasst ferner ein Verbindungsteil 20, das ebenfalls aus Kunststoff oder einem anderen Material hergestellt sein kann und als Deckel dargestellt ist. Das Verbindungsteil 20 besitzt einen sich in Axialrichtung zu dem rohrförmigen Bauteil 10 erstreckenden ringförmigen Abschnitt 21, an dessen Innenseite ein auf das Gewinde 14 des rohrförmigen Bauteils 10 aufschraubbares Gewinde 22 angeformt ist. Das Verbindungsteil 20 weist eine Abschlussfläche 23 auf, die das rohrförmige Bauteil 10 abdeckt. An der Abschlussfläche 23 sind vorstehende Vorsprünge 24 ausgebildet, die zusammen mit den Vorsprüngen 15 verriegelbare Rastmittel ausbilden.

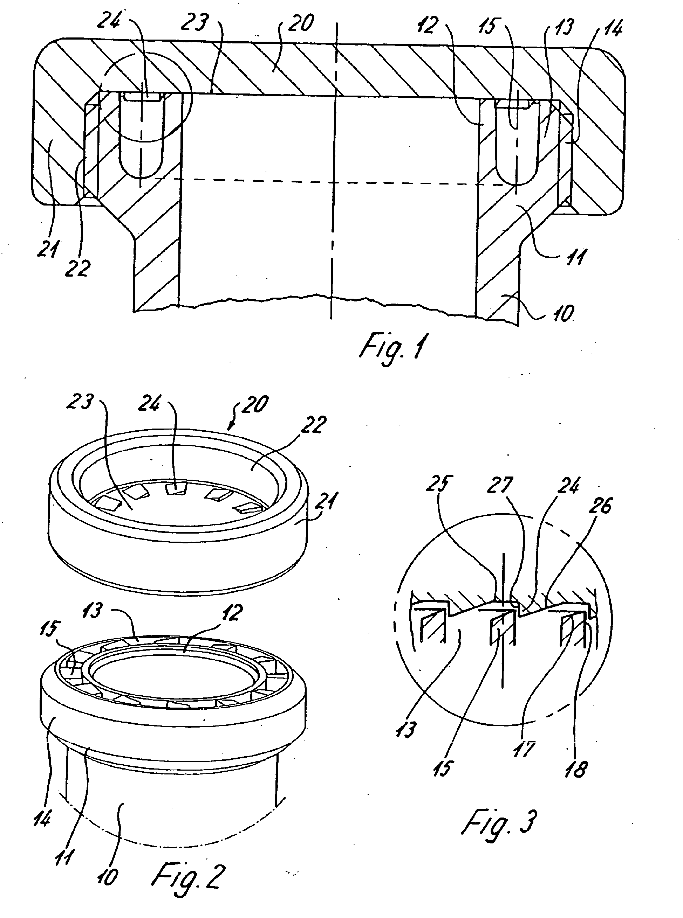

Wie insbesondere in Fig. 3 zu sehen ist, sind die Vorsprünge 15 an dem rohrförmigen Bauteil mit einer Einführschräge 17 versehen und beabstandet voneinander angeordnet, wobei zwischen den Vorsprüngen 15 ein Abstand besteht, der mindestens so groß ist wie die Vorsprünge 24 an dem Verbindungsteil 20. Auch an dem Verbindungsteil 20 sind Vorsprünge 24 ausgebildet, die eine Einführschräge 26 besitzen. Zwischen den Vorsprüngen 24 ist ein ebener Bereich 25 ausgebildet. Beim Aufschrauben des Verbindungsteils 20 greifen die Einführschrägen 17 und 26 aneinander, wobei die Abschlussfläche 23 elastisch ausgebildet ist und nach oben gedrückt wird. Sobald die Einführschrägen 17 und 26 nicht mehr aneinander anliegen, drückt die Federkraft die Vorsprünge 24 in die Abstände zwischen den Vorsprüngen 15, wobei dann eine Anschlagfläche 18 der Vorsprünge 15, eine Anschlagfläche 27 an dem Vorsprung 24 gegenüber liegt. Die Anschlagflächen 18 und 27 verhindern, dass das Verbindungsteil 20 nach dem Aufschrauben wieder gelöst werden kann.

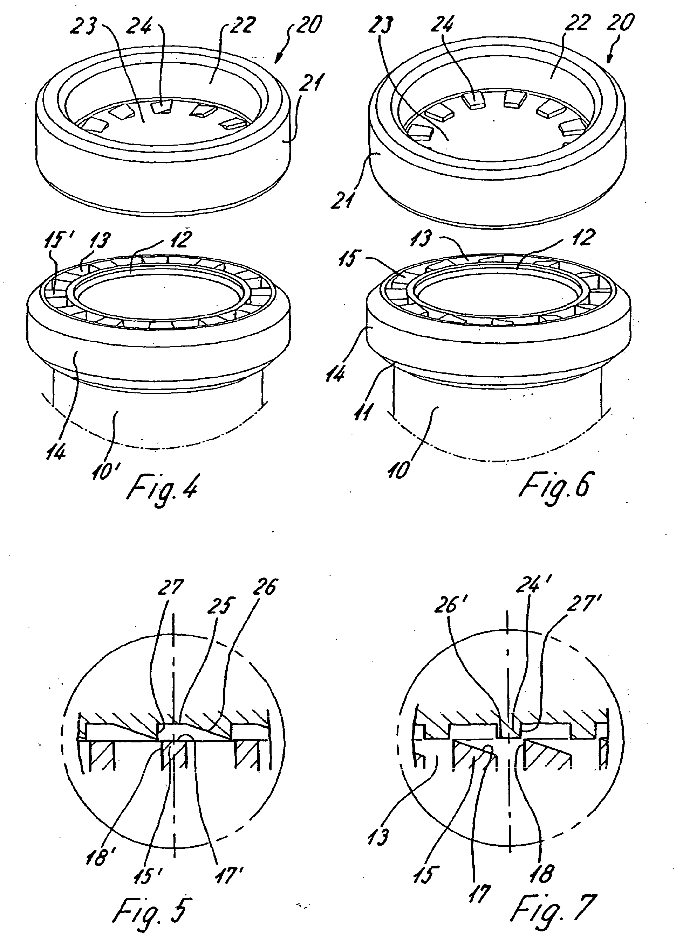

Bei dem in Fig. 4 und 5 dargestellten Ausführungsbeispiel ist das Verbindungsteil 20 wie bei dem ersten Ausführungsbeispiel ausgebildet. Lediglich das rohrförmige Bauteil 10' besitzt Vorsprünge 15', die leicht modifiziert sind. Die Vorsprünge 15' sind zwischen den Schenkeln 13 und 14 angeordnet, wobei die Vorsprünge 15' zur Stirnseite hin eben ausgebildet sind. Dadurch besitzen die Vorsprünge 15' nur eine obere Auflagefläche 17' statt einer Einführschräge sowie eine Anschlagfläche 18', die wiederum mit einer Anschlagfläche 27 an einem Vorsprung 24 des Verbindungsteils 20 zusammenwirkt. Auch mit diesen Rastmitteln 15' und 24 lässt sich eine dauerhafte Verriegelung erreichen.

Bei dem in Fig. 6 und 7 dargestellten Ausführungsbeispiel ist das rohrförmige Bauteil 10 wie bei dem ersten Ausführungsbeispiel ausgebildet. Hier ist lediglich das Verbindungsteil 20' abgewandelt, das Vorsprünge 24' aufweist, die in axialer Richtung eben sind. Beim Verschrauben des Verbindungsteils 20' mit dem rohrförmigen Bauteil 10 gleiten somit die Einführschrägen 17 an den Vorsprüngen 15 über eine Kante an einem Vorsprung 24' und über die senkrecht zur Axialrichtung des rohrförmigen Bauteils 10' verlaufende Anlagefläche 26' des Vorsprunges 24', bis ein Einrasten erfolgt. Dann liegen die Anlageflächen 18 an den Anlageflächen 27' der Vorsprünge 24' und 15 gegenüber und verhindern ein Lösen der Befestigungsanordnung.

In den dargestellten Ausführungsbeispielen sind die Vorsprünge an der Stirnkante des rohrförmigen Bauteils 10 angeordnet. Ferner kann das Gewinde an dem rohrförmigen Bauteil 10 auch innen statt außen angeformt sein.

## Patentansprüche

1. Befestigungsanordnung zur Verbindung von Bauelementen aus dem Installationsbereich, mit einem rohrförmigen Bauteil (10, 10'), an dem ein Gewindeabschnitt (14) ausgebildet ist, und einem auf das rohrförmige Bauteil (10, 10') aufschraubbaren Verbindungsteil (20, 20'), das in der montierten Position einen stirnseitigen Endabschnitt (11) des rohrförmigen Bauteiles (10, 10') abdeckt, wobei an dem rohrförmigen Bauteil (10, 10') und an dem Verbindungsteil (20, 20') Rastmittel (15, 15', 24, 24') vorgesehen sind, die durch Verschrauben des rohrförmigen Bauteils (10, 10') mit dem Verbindungsteil (20, 20') zur Sicherung der Schraubverbindung in Eingriff bringbar sind, **dadurch gekennzeichnet, dass** die Rastmittel (15, 15') an dem rohrförmigen Bauteil (10, 10') brückenartig zwischen einem inneren Schenkel (12) und einem äußeren Schenkel (13) an einer Stirnkante des rohrförmigen Bauteils ausgebildet sind, und dass zwischen den Rastmitteln (15, 15') des rohrförmigen Bauteils (10, 10') ein Abstand besteht, der mindestens so groß ist wie die in Drehrichtung des Verbindungsteils (20, 20') betrachtete Abmessung des jeweiligen Rastmittels (24, 24') am Verbindungsteil (20, 20'), wobei die Rastmittel (24, 24') am Verbindungsteil (20 ,20') in dessen montierter Position zwischen den voneinander beabstandeten Rastmitteln (15, 15') des rohrförmigen Bauteils (10, 10') angeordnet sind.

2. Befestigungsanordnung nach Anspruch 1, **dadurch gekennzeichnet, dass** die Rastmittel (24, 24') an dem Verbindungsteil (20, 20') federnd ausgebildet sind.

3. Befestigungsanordnung nach Anspruch 1 oder 2, **dadurch gekennzeichnet, dass** die Rastmittel (15, 15', 24, 24') beim Verschrauben des rohrförmigen Bauteils (10, 10') mit dem Verbindungsteil (20, 20') verrasten und eine Drehbewegung zum Lösen der Gewindeverbindung verhindern.

4. Befestigungsanordnung nach einem der Ansprüche 1 bis 3, **dadurch gekennzeichnet, dass** das Verbindungsteil (20) einen radial nach innen gerichteten Flansch aufweist, an dem mehrere ringförmig angeordnete Rastmittel (24) vorgesehen sind.

5. Befestigungsanordnung nach Anspruch 4, **dadurch gekennzeichnet, dass** an dem Flansch ein ringförmiger Abschnitt (21) ausgebildet ist, an dem ein Gewindeabschnitt (22) angeformt ist.

6. Befestigungsanordnung nach einem der Ansprüche 1 bis 5, **dadurch gekennzeichnet, dass** an dem Verbindungsteil (20, 20') mindestens acht als Rastmittel dienende Vorsprünge (24, 24') vorgsehen sind.

7. Befestigungsanordnung nach einem der Ansprüche 1 bis 6, **dadurch gekennzeichnet, dass** die Rastmittel (15, 24) jeweils eine Einführschrägen (17, 26) aufweisen.

8. Befestigungsanordnung nach einem der Ansprüche 1 bis 7, **dadurch gekennzeichnet, dass** das Verbindungsteil (20, 20') als Deckel ausgebildet ist.

9. Befestigungsanordnung nach einem der Ansprüche 1 bis 8, **dadurch gekennzeichnet, dass** das Verbindungsteil (20, 20') und/oder das rohrförmige Bauteil (10, 10') aus Kunststoff ausgebildet ist.

## Claims

1. An attachment arrangement for connecting components in the field of installation, with a tubular part (10, 10') on which a threaded section (14) is formed, and a connection part (20, 20') which can be screwed onto the tubular part (10 10') and which in the assembled position covers an end section (11) of the tubular part (10, 10') on the front side, engagement means (15, 15' 24, 24') being provided on the tubular part (10, 10') and on the connection part (20, 20') which can be engaged by screwing the tubular part (10, 10') onto the connection part (20, 20') in order to secure the screwed connection, **characterised in that** the engagement means (15, 15') on the tubular part (10, 10') are formed like a bridge between an inner side piece (12) and an outer side piece (13) on a front edge of the tubular part, and that there is a distance between the engagement means (15, 15') of the tubular part (10, 10') which is at least as big as the dimension of the respective engagement means (24, 24') on the connection part (20, 20'), as viewed in the rotational direction of the connection part (20, 20'), the engagement means (24, 24') on the connection part (20, 20') being disposed in its assembled position between the engagement means (15, 15') of the tubular part (10, 10') spaced apart from one another.

2. The attachment arrangement according to Claim 1, **characterised in that** the engagement means (24, 24') on the connection part (20, 20') are designed to be resilient.

3. The attachment arrangement according to Claim 1 or 2, **characterised in that** the engagement means (15, 15', 24, 24') engage when the tubular part (10, 10') is screwed onto the connection part (20, 20') and prevent a rotational movement which would release the threaded connection.

4. The attachment arrangement according to any of Claims 1 to 3, **characterised in that** the connection part (20) has a flange pointing radially inwards on which several annularly disposed engagement means (24) are provided.

5. The attachment arrangement according to Claim 4, **characterised in that** an annular section (21) is formed on the flange on which a threaded section (22) is moulded.

6. The attachment arrangement according to any of Claims 1 to 5, **characterised in that** at least eight projections (24, 24') serving as engagement means are provided on the connection part (20, 20').

7. The attachment arrangement according to any of Claims 1 to 6, **characterised in that** the engagement means (15, 24) each have an insertion incline (17, 26).

8. The attachment arrangement according to any of Claims 1 to 7, **characterised in that** the connection part (20, 20') is in the form of a cover.

9. The attachment arrangement according to any of Claims 1 to 8, **characterised in that** the connection part (20, 20') and/or the tubular part (10, 10') is made of synthetic.

## Revendications

1. Dispositif de fixation pour relier des éléments de construction dans le domaine de l'installation, avec une pièce tubulaire (10, 10'), sur laquelle est formé un segment de filetage (14) et une pièce de liaison (20, 20') pouvant être vissée sur la pièce tubulaire (10, 10'), qui couvre, en position montée, un segment terminal (11) frontal de la pièce tubulaire (10, 10'), / où sur la pièce tubulaire (10, 10') et sur la pièce de liaison (20, 20'), sont prévus des dispositifs à cran (15, 15', / 24, 24'), / qui peuvent être mis en prise par vissage de la pièce tubulaire (10, 10') avec la pièce de liaison (20, 20') pour assurer la liaison de vissage, **caractérisé en ce que** les dispositifs à cran (15, 15') sur la pièce tubulaire (10, 10') sont formés comme un pont entre un montant interne (12) et un montant externe (13) sur un bord frontal de la pièce tubulaire et **en ce qu'**entre les dispositifs à cran (15, 15') de la pièce tubulaire (10, 10'), il existe une distance qui est au moins aussi grande que la mesure envisagée de chaque dispositif à cran (24, 24') en direction de rotation de la pièce de liaison (20, 20'), où les dispositifs à cran (24, 24') de la pièce de liaison (20, 20') sont agencés dans cette position montée, entre les dispositifs à cran (15, 15') distants de la pièce tubulaire (10, 10').

2. Dispositif de fixation selon la revendication 1, **caractérisé en ce que** les dispositifs à cran (24, 24') de la pièce de liaison (20, 20') sont formés de manière élastique.

3. Dispositif de fixation selon la revendication 1 ou 2, **caractérisé en ce que** les dispositifs à cran (15, 15', 24, 24') s'enclenchent lors du vissage de la pièce tubulaire (10, 10') avec la pièce de liaison (20, 20') et empêchent un mouvement de rotation pour le détachement de la liaison à filetage.

4. Dispositif de fixation selon l'une des revendications 1 à 3, **caractérisé en ce que** la pièce de liaison (20) présente une bride radiale, dirigée vers l'intérieur, sur laquelle plusieurs dispositifs à cran (24), agencés de manière circulaire, sont prévus.

5. Dispositif de fixation selon la revendication 4, **caractérisé en ce que** sur la bride, est formé un segment annulaire (21), sur lequel est formé un segment fileté (22).

6. Dispositif de fixation selon l'une des revendications 1 à 5, **caractérisé en ce que** sur la pièce de liaison (20, 20'), sont prévus au moins huit saillies (24, 24') servant de dispositif à cran.

7. Dispositif de fixation selon l'une des revendications 1 à 6, **caractérisé en ce que** les dispositifs à cran (15, 24) présentent chaque fois, un biseau d'introduction (17, 26).

8. Dispositif de fixation selon l'une des revendications 1 à 7, **caractérisé en ce que** la pièce de liaison (20, 20') est formée comme un couvercle.

9. Dispositif de fixation selon l'une des revendications 1 à 8, **caractérisé en ce que** la pièce de liaison (20, 20') et/ou la pièce tubulaire (10, 10') sont conçues en matière plastique.
